# EUROPEAN PATENT SPECIFICATION

(11) **EP 3 938 421 B1**
(45) Date of publication and mention of the grant of the patent: **30.11.2022**
(21) Application number: 20709588.6
(22) Date of filing: 10.03.2020
(51) Int. Cl.: C08G 65/26, C08G 73/02, C11D 3/37

(54) **ALKOXYLATED POLYALKYLENE IMINES OR ALKOXYLATED POLYAMINES WITH A TERMINAL POLYBUTYLENE OXIDE BLOCK**
ALKOXYLIERTE POLYALKYLENIMINE ODER ALKOXYLIERTE POLYAMINE MIT EINEM ENDSTÄNDIGEN POLYBUTYLENOXIDBLOCK
POLYALKYLÈNE-IMINES ALCOXYLÉS OU POLYAMINES ALKOXYLÉES COMPORTANT UN BLOC TERMINAL D'OXYDE DE POLYBUTYLÈNE

(30) Priority: 15.03.2019 EP 19163128
(43) Date of publication of application: 19.01.2022
(73) Proprietor: BASF SE, 67056 Ludwigshafen (DE)
(72) Inventor: LUDOLPH, Björn, 67056 Ludwigshafen (DE); EBERT, Sophia, 67056 Ludwigshafen (DE); SCIALLA, Stefano, Cincinnati, Ohio 45202 (US); HUELSKOETTER, Frank, Cincinnati, Ohio 45202 (US); JACKSON, Michelle, Cincinnati, Ohio 45202 (US); BLYTH, Kevin, Cincinnati, Ohio 45202 (US); CHILTON, Ruth, Cincinnati, Ohio 45202 (US)
(86) International application number: PCT/EP2020/056341
(87) International publication number: WO 2020/187648

(56) References cited:
- US-A- 3 152 188
- US-A- 5 190 695
- US-A- 6 127 331

## Description

The present invention relates to an alkoxylated polyalkylene imine or an alkoxylated polyamine according to the general formula (I) 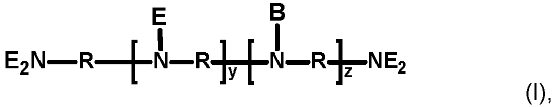 in which the variables E, R, B, y and z are defined below.

The present invention further relates to a process for preparing such alkoxylated polyalkylene imines or alkoxylated polyamines as well as to the use of such compounds within, for example, cosmetic formulations.

WO 2015/028191 relates to water-soluble alkoxylated polyalkylene imines having an inner block of polyethylene oxide comprising 5 to 18 polyethylene oxide units, a middle block of polyalkylene oxide comprising 1 to 5 polyalkylene oxide units and an outer block of polyethylene oxide comprising 2 to 14 polyethylene oxide units. The middle block is formed from polypropylene oxide units, polybutylene oxide units and/or polypentene oxide units. In addition, the present invention relates to water-soluble alkoxylated polyamines.

WO 99/67352 relates to polyalkylene imines having a backbone molecular weight of from 600 to 25000g/mol, wherein the polyamine backbone is first modified by 1 to 10 propyleneoxy units, butyleneoxy units and mixtures thereof, followed by ethyleneoxy units such that the total degree of alkyleneoxylation does not exceed 50 units. These polyalkylene imines are suitable as soil dispersant in laundry formulations.

WO 99/67353 discloses laundry compositions comprising alkoxylated polyalkyleneimine dispersants, wherein the polyamine backbone is first modified with propyleneoxy units, butyleneoxy units and mixtures thereof, followed by ethyleneoxy units.

WO 2006/108856 relates to amphiphilic water-soluble alkoxylated polyalkylene imines, wherein the polyamine backbone is first modified by an inner polyalkylene oxide block of propylene oxide, butylene oxide and/or isobutylene oxide, a second middle polyethylene oxide block and an outer polypropylene oxide block.

WO 2009/060059 relates to amphiphilic water-soluble alkoxylated polyalkylene imines having an inner polyethylene oxide block comprising 20 to 50 polyethylene oxide units and an outer polypropylene oxide block comprising 10 to 50 polypropylene oxide units.

WO 95/32272 describes ethoxylated and/or propoxylated polyalkylene amine polymers to boost soil dispersing performance, wherein said polymers have an average ethoxylation/propoxylation of from 0.5 to 10 per nitrogen.

Cleaning compositions comprising alkoxylated polyalkylene imines are also known. The alkoxylated polyalkylene imines help to provide cleaning benefits, such as soil antiredeposition benefits.

The object of the present invention is to provide novel compounds based on a polyalkylene imine backbone or a polyamine backbone. Furthermore, those novel compounds should have beneficial properties when being employed within compositions to be used, for example, as cleaning compositions.

The object is achieved by an alkoxylated polyalkylene imine or alkoxylated polyamine of the general formula (I) 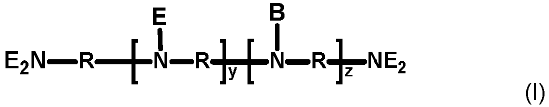 in which the variables are each defined as follows:
- R: represents identical or different, linear or branched C₂-C₁₂₋alkylene radicals or an etheralkyl unit of the following formula (III): 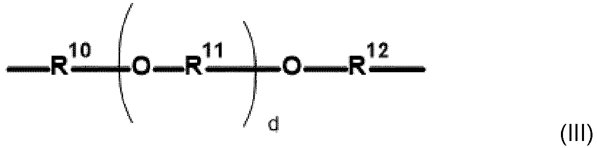
in which the variables are each defined as follows:
- R¹⁰, R¹¹, R¹²: represent identical or different, linear or branched C₂-C₆-alkylene radicals and
- d: is an integer having a value in the range of 0 to 50;

- B: represents a continuation of the alkoxylated polyalkylene imine by branching;
- y and z: are each an integer having a value in the range of 0 to 150,
- E: represents identical or different alkylenoxy units of the formula (II) 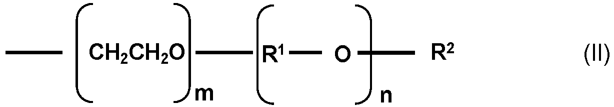
in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

The alkoxylated compounds according to the present invention may be used in cleaning compositions. They lead to improved cleaning performance of said composition, for example in respect of removing stains, compared to corresponding alkoxylated compounds according to the prior art. This is due to the fact that the alkoxylation of the respective polyalkylene imine or polyamine backbone is carried out according to the present invention in a manner that the obtained alkoxylated product contains a terminal polybutylene oxide block. The alkoxylated compounds according to the present invention having such a terminal polybutylene oxide block show improved cleaning properties, especially in connection with the removal of stains, compared to corresponding alkoxylated compounds having, for example, a terminal polyethylene oxide block.

Another advantage can be seen in the fact that the increase of volume within the reactor employed during the synthesis of the inventive alkoxylated compounds is far less due to the terminal polybutylene oxide block, compared to corresponding alkoxylated compounds according to the prior art without such a terminal polybutylene oxide block, but with, for example, a terminal polypropylene oxide block. By consequence, the synthesis of the inventive alkoxylated compounds can be carried out more economically and/or faster due to the lower increase of volume caused by the presence of the terminal polybutylene oxide block. This means that less butylene oxide can be employed in order to obtain the same effect as for polypropylene oxide. In case a terminal polypropylene oxide block (for example with 16 moles per mole of N-H functionality of the corresponding backbone polyethyleneimine) should be prepared, 2200 wt% of propylene oxide are added to the backbone polxyethylene imine. The corresponding synthesis has to be carried out within at least three steps. Whereas the corresponding terminal polybutylene oxide block with a similar hydrophobicity, can be achieved by adding 700 wt% of butylene oxide, which can be obtained within a two-step synthesis. This clearly shows that the increase of volume for the inventive alkoxylated compounds is far less compared to the corresponding compounds known from the prior art, and the whole synthesis can be carried in a more efficient way, especially in respect of the number and/or volume capacity of the reactors employed.

For the purposes of the present invention, definitions such as C₁-C₂₂-alkyl, as defined above for, for example, the radical R² in formula (II), mean that this substituent (radical) is an alkyl radical having from 1 to 22 carbon atoms. The alkyl radical can be either linear or branched or optionally cyclic. Alkyl radicals which have both a cyclic component and a linear component likewise come within this definition. The same applies to other alkyl radicals such as a C₁-C₄-alkyl radical. Examples of alkyl radicals are methyl, ethyl, n-propyl, sec-propyl, n-butyl, sec-butyl, isobutyl, 2-ethylhexyl, tert-butyl (tert-Bu/t-Bu), pentyl, hexyl, heptyl, cyclohexyl, octyl, nonyl, decyl or dodecyl.

The term "C₂-C₁₂-alkylene" as used herein refers to a saturated, divalent straight chain or branched hydrocarbon chains of 2, 3, 4, 5, 6 or up to 12 carbon groups, examples including ethane-1,2-diyl ("ethylene"), propane-1,3-diyl, propane-1,2-diyl, 2-methylpropane-1,2-diyl, 2,2-dimethylpropane-1,3-diyl, butane-1,4-diyl, butane-1,3-diyl (= 1-methylpropane-1,3-diyl), butane-1,2-diyl ("1,2-butylene"), butane-2,3-diyl, 2-methyl-butan-1,3-diyl, 3-methyl-butan-1,3-diyl (= 1,1-dimethylpropane-1,3-diyl), pentane-1,4-diyl, pentane-1,5-diyl, pentane-2,5-diyl, 2-methylpentane-2,5-diyl (= 1,1-dimethylbutane-1,3-diyl) and hexane-1,6-diyl.

For the purposes of the present invention, the term "aralkyl", as defined above for, for example, the radical R² in formula (II), means that the substituent (radical) is an aromatic ("ar") combined with an alkyl substituent ("alkyl"). The aromatic "ar" part can be a monocyclic, bicyclic or optionally polycyclic aromatic. In the case of polycyclic aromatics, individual rings can optionally be fully or partially saturated. Preferred examples of aryl are phenyl, naphthyl or anthracyl, in particular phenyl.

Within the context of the present invention, the term "polyalkylene imine" differs from the corresponding term "polyamine" especially in respect of the branching of the corresponding backbone. Whereas polyamines in the context of the present invention are (predominantly) linear compounds in respect of its backbone (without consideration of any alkoxylation), containing primary and/or secondary amino moieties but no tertiary amino moieties within its backbone, the corresponding polyalkylene imines are, according to the present invention, (predominantly) branched molecules containing in respect of its backbone (without consideration of any alkoxylation), in addition to the primary and/or secondary amino moieties, mandatorily tertiary amino moieties, which cause the branching of the (linear) main chain into several side chains within the polymeric backbone (basic skeleton). Polyalkylene imines, both as backbone and as alkoxylated compounds, are those compounds falling under the definition of general formula (I), wherein z is an integer of at least 1. In contrast to that, polyamines, both as backbone and as alkoxylated compounds, are those compounds of formula (I), wherein z is 0.

By consequence, the inventive alkoxylated polyalkylene imines have a basic skeleton (backbone), which comprises primary, secondary and tertiary amine nitrogen atoms which are joined by alkylene radicals R (as defined below) and are in the form of the following moieties in random arrangement:
- primary amino moieties which terminate the main chain and the side chains of the basic skeleton and whose hydrogen atoms are subsequently replaced by alkylenoxy units: 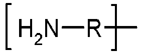 and -NH₂
- secondary amino moieties whose hydrogen atom is subsequently replaced by alkylenoxy units: 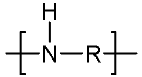
- tertiary amino moieties which branch the main chain and the side chains:

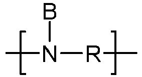

For the sake of completeness, it is indicated that the variable B indicating the branching of the polyalkylene imine backbone of compounds according to general formula (I) may contain fragments, such as -[-NH-R]_{y}-, H₂N-R or combinations thereof, including a two times, three times or even higher degree of branching. Said tertiary amino moieties are not present in the backbone of polyamine compounds.

In order to obtain the respective alkoxylated compounds, the hydrogen atoms of the primary and/or secondary amino groups of the basic polyalkylene imine or polyamine skeleton are replaced by alkylenoxy units of the formula (II) 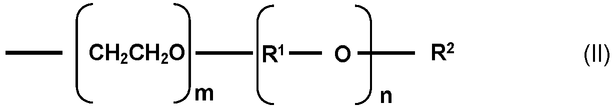 in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

Within the context of the present invention, the term "polyalkylene imine backbone" relates to those fragments of the inventive alkoxylated polyalkylene imines which are not alkoxylated. The polyalkylene imine backbone is employed within the present invention as an educt to be alkoxylated first with ethylene oxide and then with butylene oxide in order to obtain the inventive alkoxylated polyalkylene imines ("alkoxylated compounds"). Polyalkylene imines as such (backbones or not alkoxylated compounds) are known to a person skilled in the art. For example, the polyalkylene imine backbone can be derived from the compounds according to general formula (I) by replacing the variable E with hydrogen atoms (H).

Within the context of the present invention, the term "polyamine backbone" relates to those fragments of the inventive alkoxylated polyamines which are not alkoxylated. The polyamine backbone is employed within the present invention as an educt to be alkoxylated first with ethylene oxide and then with butylene oxide in order to obtain the inventive alkoxylated polyamines ("alkoxylated compounds"). Polyamines as such (backbones or not alkoxylated compounds) are known to a person skilled in the art. For example, the polyamine backbone can be derived from the compounds according to general formula (I) by replacing the variable E with hydrogen atoms (H).

The invention is specified in more detail as follows:
The invention relates to an alkoxylated polyalkylene imine or alkoxylated polyamine of the general formula (I) 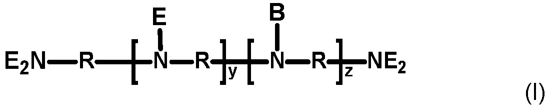 in which the variables are each defined as follows:
- R: represents identical or different, linear or branched C₂-C₁₂₋alkylene radicals or an etheralkyl unit of the following formula (III): 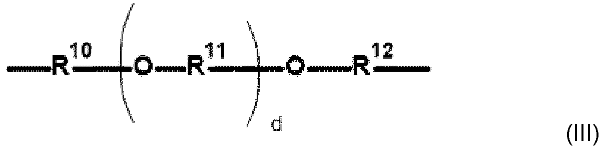
in which the variables are each defined as follows:
- R¹⁰, R¹¹, R¹²: represent identical or different, linear or branched C₂-C₆-alkylene radicals and
- d: is an integer having a value in the range of 0 to 50;

- B: represents a continuation of the alkoxylated polyalkylene imine by branching;
- y and z: are each an integer having a value in the range of 0 to 150,
- E: represents identical or different alkylenoxy units of the formula (II) 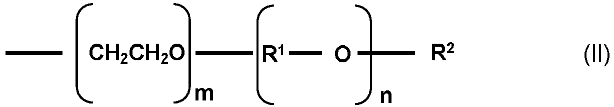
in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

The alkoxylated compounds falling under the definition of general formula (I) are preferably amphiphilic.

For the sake of completeness, it is indicated that the variable B indicating the branching of the alkoxylated polyalkylene imine compounds according to general formula (I) may contain fragments, such as -[-NE-R]_{y}-, E₂N-R or combinations thereof, including a two times, three times or even higher degree of branching. Said tertiary amino moieties caused by the branching of the backbone are not present within alkoxylated polyamine compounds according to general formula (I) since the variable z is 0 for those kind of compounds within formula (I).

For the sake of completeness, it is also indicated that the variable E represents alkylenoxy units of the formula (II), which are formed by blocks of repeating units (blocks) based on ethylene oxide and (iso)butylene oxide. The size of the individual blocks is governed by the variables m or n, respectively.

Within the compounds according to general formula (I), it is preferred that R represents identical or different, linear or branched C₂-C₁₂₋alkylene radicals, preferably R is ethylene, propylene or hexamethylene.

It is even more preferred for the alkoxylated compounds of the present invention that within formula (II) the variables are each defined as follows:
- R¹: represents 1,2-butylene;
- R²: represents hydrogen and/or C₁-C₄-alkyl, preferably hydrogen, methyl and/or ethyl, most preferably hydrogen;
- m: is an integer having a value in the range of 20 to 50, preferably of 20 to 40, more preferably of 21 to 28, in particular of 22 to 25;
- n: is an integer having a value in the range of 3 to 20, preferably of 4 to 12, more preferably of 4 to 8, in particular of 4 to 7.

It is also preferred for the alkoxylated compounds according to general formula (I) of the present invention that the molecular weight (Mw) of the polyalkylene imine backbone or of the polyamine backbone lies in the range of 50 to 10 000 g/mol, preferably in the range of 500 to 5000 g/mol, more preferably in the range of 600 to 1000 g/mol. In another embodiment, the range is more preferably of 600 to 2000 g/mol.

The person skilled in the art knows how to determine/measure the respective molecular weight (M_{W}). This can be done, for example, by size exclusion chromatography (such as GPC). Preferably, M_{W} values are determined by the method as follows: OECD TG 118 (1996), which means in detail

OECD (1996), Test No. 118: Determination of the Number-Average Molecular Weight and the Molecular Weight Distribution of Polymers using Gel Permeation Chromatography, OECD Guidelines for the Testing of Chemicals, Section 1, OECD Publishing, Paris, also available on the internet, for example, under https://doi.org/10.1787/9789264069848-en.

Within the present invention, it is preferred that the compounds according to general formula (I) are alkoxylated polyalkylene imines. By consequence, the variable z is an integer having value of at least 1 for those type of compounds.

Alkoxylated polyalkylene imine compounds according to formula (I) are preferably compounds wherein the variables are each defined as follows:
- R: is ethylene or propylene, preferably ethylene;
- the sum of y+z: is an integer having a value in the range of 9 to 120, preferably in the range of 10 to 20.

It is even more preferred for alkoxylated polyalkylene imine compounds according to general formula (I) that the variables are defined as follows:
- R: is ethylene or propylene, preferably ethylene;
- the sum of y+z: is an integer having a value in the range of 9 to 120, preferably in the range of 10 to 20;
- R¹: represents 1,2-butylene;
- R²: represents hydrogen and/or C₁-C₄-alkyl, preferably hydrogen, methyl and/or ethyl, most preferably hydrogen;
- m: is an integer having a value in the range of 20 to 50, preferably 20 to 40, more preferably of 21 to 28, in particular of 22 to 25;
- n: is an integer having a value in the range of 3 to 20, preferably of 4 to 12, more preferably of 4 to 8, in particular of 4 to 7.

In a preferred embodiment of the present invention, the alkoxylated polyalkylene imine compounds according to general formula (I) are those compounds wherein the variables are each defined as follows:
- R: is ethylene
- the sum of y+z: is an integer having a value in the range of 10 to 20;
- R¹: represents 1,2-butylene;
- R²: represents hydrogen;
- m: is an integer having a value in the range of 22 to 25;
- n: is an integer having a value in the range of 4 to 7.

In one embodiment of the present invention, a preferred alkoxylated polyalkylene imine has the general structure of formula (IV): 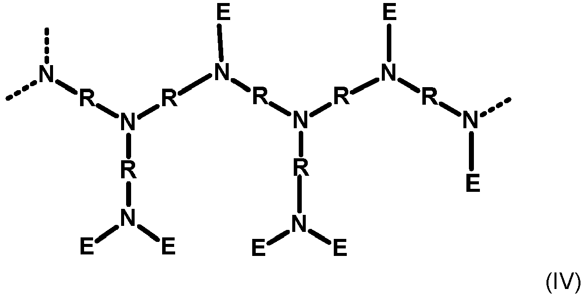 wherein R represents identical or different, linear or branched C₂-C₆-alkylene radicals and
E is an (identical or different) alkylenoxy unit of the formula II 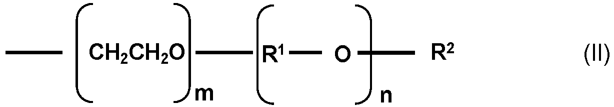 in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

In another embodiment of the present invention, a preferred alkoxylated polyalkylene imine has the general structure of formula (V), 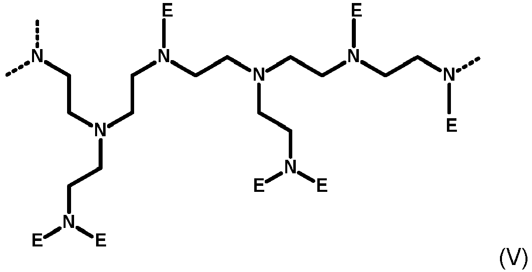 wherein E is an (identical or different) alkylenoxy unit of the formula II 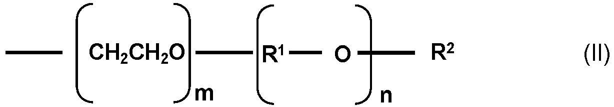 in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

In another embodiment of the present invention the alkoxylated compounds falling under the definition of general formula (I) are alkoxylated polyamines. For those kind of compounds, the variable z is 0.

The inventive alkoxylated polyamines are preferably, but not limited to, alkoxylated hexamethylenediamine, alkoxylated ethylenediamine, alkoxylated 1,3-diaminopropane, alkoxylated neopentanediamine, alkoxylated diethylentriamine, alkoxylated octamethylenediamine, alkoxylated 1,2-propylenediamine or alkoxylated isophoronediamine.

The R radicals connecting the amine nitrogen atoms may be identical or different, linear or branched C₂-C₁₂₋alkylene radicals, preferably C₂-C₆-alkylene radicals. A preferred branched alkylene is 1,2-propylene. A particularly preferred alkylene radical R is ethylene or hexamethylene.

In case the alkoxylated compounds according to general formula (I) are alkoxylated polyamines, it is preferred that the variables are defined as follows:
- y and z: are both 0,
- R: represents identical or different, linear or branched C₂-C₁₂-alkylene radicals or an etheralkyl unit according to formula (III), wherein

- d: is from 1 to 5, and
- R¹⁰, R¹¹, R¹²: are independently selected from linear or branched C₃ to C₄ alkylene radicals.

It is even more preferred for those kind of alkoxylated polyamine compounds according to formula (I) that
- R¹: represents 1,2-butylene;
- R²: represents hydrogen and/or C₁-C₄-alkyl, preferably hydrogen, methyl and/or ethyl, most preferably hydrogen;
- m: is an integer having a value in the range of 20 to 50, preferably 20 to 40, more preferably of 21 to 28, in particular of 22 to 25;
- n: is an integer having a value in the range of 3 to 20, preferably of 4 to 12, more preferably of 4 to 8, in particular of 4 to 7.

In a preferred embodiment for alkoxylated polyamine compounds according to formula (I), the variables are defined as follows:
- R: is linear hexamethylene;
- R¹: represents 1,2-butylene;
- R²: represents hydrogen;
- m: is an integer having a value in the range of 22 to 25;
- n: is an integer having a value in the range of 4 to 7.

In another preferred embodiment of the present invention, a preferred alkoxylated polyamine has the general structure of formula (VI) 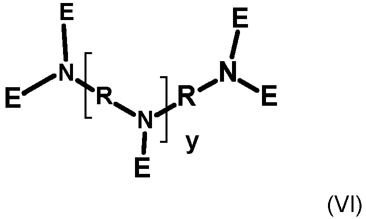 wherein R is identical or different selected from linear or branched C₂-C₁₂₋alkylene radicals such as 1,2-ethylene; 1,2-propylene; 1,3-propylene; 1,4-butylene; 1,6-hexylene; 1,8-octylene; wherein y is from 0 to 150 and wherein E is an alkylenoxy unit of the formula II 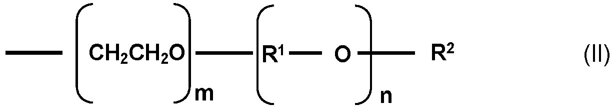 in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

In another preferred embodiment of the present invention, the preferred alkoxylated polyamine has the general structure of formula (VII)

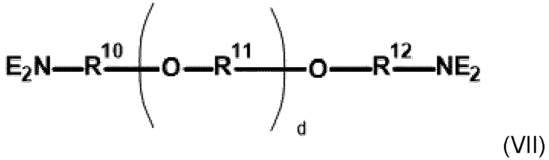

Wherein R¹⁰, R¹¹, R¹² represent identical or different, linear or branched C₂-C₆-alkylene radicals and d is an integer having a value in the range of from 0 to 50;
In a preferred embodiment d is from 1 to 10, and R¹⁰, R¹¹, R¹² are independently selected from linear or branched C₂ to C₄ alkylene radicals, preferably selected from 1,2-ethylene; 1,2-propylene; 1,3-propylene; 1,2-butylene; 1,4-butylene and wherein E is an alkylenoxy unit of the formula II 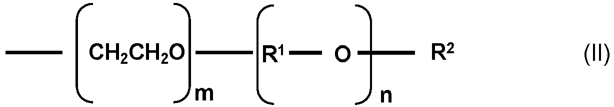 in which the variables are each defined as follows:
- R¹: represents 1,2-butylene and/or 1,2-isobutylene;
- R²: represents hydrogen and/or C₁-C₂₂-alkyl and/or C₇-C₂₂ aralkyl;
- m: is an integer having a value of at least 20;
- n: is an integer having a value of at least 3.

The inventive alkoxylated polyalkylene imines or alkoxylated polyamines may also be quaternized. A suitable degree of quaternization is up to 100%, in particular from 10 to 95% The quaternization is effected preferably by introducing C₁-C₂₂-alkyl groups, C₁-C₄-alkyl groups and/or C₇-C₂₂ aralkyl groups and may be undertaken in a customary manner by reaction with corresponding alkyl halides and dialkyl sulfates.

The quaternization may be advantageous in order to adjust the alkoxylated polyalkylene imines or the alkoxylated polyamines to the particular composition such as cosmetic compositions in which they are to be used, and to achieve better compatibility and/or phase stability of the formulation.

The quaternization of alkoxylated polyalkylene imines or alkoxylated polyamines is achieved preferably by introducing C₁-C₂₂ alkyl, C₁-C₄-alkyl groups and/or C₇-C₂₂ aralkyl, aryl or alkylaryl groups and may be undertaken in a customary manner by reaction with corresponding alkyl-, aralkyl - halides and dialkylsulfates, as described for example in WO 09/060059.

Quaternization can be accomplished, for example, by reacting an alkoxylated polyamine or alkoxylated polyalkylene imine with an alkylation agent such as a C₁-C₄-alkyl halide, for example with methyl bromide, methyl chloride, ethyl chloride, methyl iodide, n-butyl bromide, isopropyl bromide, or with an aralkyl halide, for example with benzyl chloride, benzyl bromide or with a di-C₁₋C₂₂-alkyl sulfate in the presence of a base, especially with dimethyl sulfate or with diethyl sulfate. Suitable bases are, for example, sodium hydroxide and potassium hydroxide.

The amount of alkylating agent determines the amount of quaternization of the amino groups in the polymer, i.e. the amount of quaternized moieties.

The amount of the quaternized moieties can be calculated from the difference of the amine number in the non-quaternized amine and the quaternized amine.

The amine number can be determined according to the method described in DIN 16945.

The reaction can be carried out without any solvent. However, a solvent or diluent like water, acetonitrile, dimethylsulfoxide, N-Methylpyrrolidone, etc. may be used. The reaction temperature is usually in the range from 10°C to 150°C and is preferably from 50°C to 100°C.

Another subject of the present invention is a process for preparing the alkoxylated polyalkylene imines or the alkoxylated polyamines as described above. Within this process, a polyalkylene imine backbone or a polyamine backbone is first reacted with ethylene oxide and then with butylene oxide in order to obtain the respective alkoxylated compounds.

It has to be noted that the alkoxylation process as such, wherein a backbone of polyalkylene imines or polyamines is reacted with alkylene oxides, such as ethylene oxide or butylene oxide, is known to a person skilled in the art.

It is preferred within said process that per mol of N-H functionalities in the polyalkylene imine or polyamine the polyalkylene imine backbone or polyamine backbone is reacted with at least 20 moles ethylene oxide and then with at least 3 moles butylene oxide.

One preferred procedure consists in initially undertaking only an incipient alkoxylation of the backbone of the polyalkylene imine or the polyamine in a first step. In this first step, the backbone of the polyalkylene imine or of the polyamine is reacted only with a portion of the total amount of ethylene oxide used, which corresponds to about 1 mole of ethylene oxide per mole of NH moiety.

This reaction is undertaken generally in the absence of a catalyst in aqueous solution at from 70 to 200°C, preferably from 80 to 160°C, under a pressure of up to 10 bar, in particular up to 8 bar.

In a second step, the further alkoxylation is then effected by subsequent reaction i) with the remaining amount of ethylene oxide; ii) with butylene oxide.

Said second step of the alkoxylation reaction is undertaken typically in the presence of a basic catalyst. Examples of suitable catalysts are alkali metal and alkaline earth metal hydroxides such as sodium hydroxide, potassium hydroxide and calcium hydroxide, alkali metal alkoxides, in particular sodium and potassium C₁-C₄-alkoxides, such as sodium methoxide, sodium ethoxide and potassium tert-butoxide, alkali metal and alkaline earth metal hydrides such as sodium hydride and calcium hydride, and alkali metal carbonates such as sodium carbonate and potassium carbonate. Preference is given to the alkali metal hydroxides and the alkali metal alkoxides, particular preference being given to potassium hydroxide and sodium hydroxide. Typical use amounts for the base are from 0.05 to 10% by weight, in particular from 0.5 to 2% by weight, based on the total amount of polyalkylene imine or polyamine and alkylene oxide.

The second step of alkoxylation may be undertaken in substance (variant a)) or in an organic solvent (variant b)). The process conditions specified below may be used both for steps of the alkoxylation reaction.

In variant a), the aqueous solution of the incipiently alkoxylated polyalkylene imine or polyamine obtained in the first step, after addition of the catalyst, is initially dewatered. This can be done in a simple manner by heating to from 80 to 150°C and distilling off the water under a reduced pressure of from less than 30 mbar. The subsequent reactions with the alkylene oxides are effected typically at from 70 to 200°C, preferably from 100 to 180°C, and at a pressure of up to 10 bar, in particular up to 8 bar, and a continued stirring time of from about 0.5 to 4h at from about 100 to 160°C and constant pressure follows in each case.

Suitable reaction media for variant b) are in particular nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and dioxane, N,N-dialkylamides such as dimethylformamide and dimethylacetamide, and N-alkyllactams such as N-methylpyrrolidone. It is of course also possible to use mixtures of these aprotic solvents. Preferred solvents are xylene and toluene.

In variant b) too, the solution obtained in the first step, after addition of catalyst and solvent, is initially dewatered, which is advantageously done by separating out the water at a temperature of from 120 to 180°C, preferably supported by a gentle nitrogen stream. The subsequent reaction with the alkylene oxide may be effected as in variant a).

In variant a), the alkoxylated polyalkylene imine or polyamine is obtained directly in substance and may be converted if desired to an aqueous solution. In variant b), the organic solvent is typically removed and replaced by water. The products may of course also be isolated in substance.

In a preferred embodiment, per mol of N-H functionalities in the polyalkylene imine or polyamine the polyalkylene imine backbone or polyamine backbone is first reacted with 1 mole ethylene oxide, then with at least 19 moles ethylene oxide and then with at least 3 moles butylene oxide.

In another preferred embodiment, the polyalkylene imine backbone is a polyethylene imine or the polyamine backbone is a hexamethylene diamine.

In another preferred embodiment, the alkoxylated polyalkylene imine or alkoxylated polyamine is additionally quaternized as described above. However, it is also possible to sulfatize the alkoxylated compounds instead of or in addition to the quaternization.

Another subject matter of the present invention is the use of the above-mentioned alkoxylated polyalkylene imines or alkoxylated polyamines in cosmetic formulations, as crude oil emulsion breaker, in pigment dispersions for ink jet inks, formulations for electro plating, in cementitious compositions.

The inventive alkoxylated polyalkylene imines or alkoxylated polyamines can be added to cosmetic formulations, as crude oil emulsion breaker, in pigment dispersions for ink jet inks, formulations for electro plating, in cementitious compositions. However, the inventive compounds can also be added to (used in) washing or cleaning compositions.

The inventive alkoxylated polyalkylene imines or alkoxylated polyamines are present in said formulations at a concentration of 0.1 to 5 weight%, preferably at a concentration of 0.5 to 2 weight%.

The inventive alkoxylated polyalkylene imines or alkoxylated polyamines can also be added to a cleaning composition comprising from about 1% to about 70% by weight of a surfactant system. The inventive alkoxylated polyalkylene imines or alkoxylated polyamines may be present in a cleaning composition at a concentration of from about 0.1% to about 5% by weight of the composition, or at a concentration of from about 0.5% to about 2% by weight of the composition.

### Cleaning Composition

As used herein the phrase "cleaning composition" includes compositions and formulations designed for cleaning soiled material. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation. The cleaning compositions may have a form selected from liquid, powder, single-phase or multi-phase unit dose, pouch, tablet, gel, paste, bar, or flake.

The cleaning compositions comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

The cleaning compositions may also contain adjunct cleaning additives. Suitable adjunct cleaning additives include builders, structurants or thickeners, clay soil removal/anti-redeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds supressors, softeners, and perfumes.

The following examples shall further illustrate the present invention without restricting the scope of the invention.

### Examples:

In the examples, the following abbreviations are used:
- EO: ethylene oxide
- BUO: butylene oxide
- PEI600: polyethylene imine with an average molecular weight of 600g/mol
- x EO/NH: x mole ethylene oxide per mole of NH-functionality
- y BUO/NH: y mole butylene oxide per mole of NH-functionality

### Synthesis:

### Example 1: polyethylene imine, molecular weight 600 g/mol, alkoxylated with 24 mole ethylene oxide and 4 mole 1,2-butylene oxide per NH functionality.

### Step 1a) polyethylene imine, molecular weight 600 g/mol, alkoxylated with 1 mole ethylene oxide per NH functionality

A 5 I autoclave was charged with 665.0 g of a polyethylenimine with an average molecular weight of 600 g/mol and 33.3 g water. The reactor was purged three times with nitrogen and heated to 110°C. 680.5 g ethylene oxide were added within 13 hours. To complete the reaction, the reaction mixture was allowed to post-react for 5 hours. Water and volatile compounds were removed in vacuo (20 mbar) at 90°C. A highly viscous yellow oil (1340.0 g, pH: 11,05 (5% in water)) was obtained.

### Step 1b) polyethylene imine, molecular weight 600 g/mol, alkoxylated with 24 mole ethylene oxide per NH functionality

Product from step 1a) (101.3 g) and 5.1 g potassium hydroxide (50% in water) was placed in a 2 I autoclave. The mixture was heated under vacuum (< 10 mbar) to 120°C and stirred for 2 hours to remove water. The reactor was purged three times with nitrogen and the mixture was heated to 140°C. 1178.3 g ethylene oxide were added within 8 hours. To complete the reaction, the mixture was allowed to post-react for 3 hours. Volatile compounds were removed in vacuo. 1275.0 g of a light brown solid were obtained.

### Step 1c) polyethylene imine, molecular weight 600 g/mol, alkoxylated with 24 mole ethylene oxide and 4 mole butylene oxide per NH functionality

Product from step 1b) (577.0 g) and 0.6 g potassium hydroxide (50% in water) was placed in a 2 I autoclave. The mixture was heated under vacuum (< 10 mbar) to 120°C and stirred for 2 hours to remove water. The reactor was purged three times with nitrogen and the mixture was heated to 140°C. 156.2 g butylene oxide were added within 2 hours. To complete the reaction, the mixture was allowed to post-react for 5 hours. Volatile compounds were removed in vacuo at 90°C. 704.0 g of a light brown oil were obtained (cloud point 43°C (1% in water)).

### Example 2: polyethylene imine, molecular weight 600 g/mol, alkoxylated with 24 mole ethylene oxide and 6 mole 1,2-butylene oxide per NH functionality.

### Step 2c) polyethylene imine, molecular weight 600 g/mol, alkoxylated with 24 mole ethylene oxide and 6 mole butylene oxide per NH functionality

Product from example 1, step 1b) (536.8 g) and 0.8 g potassium hydroxide (50% in water) was placed in a 2 I autoclave. The mixture was heated under vacuum (< 10 mbar) to 120°C and stirred for 2 hours to remove water. The reactor was purged three times with nitrogen and the mixture was heated to 140°C. 217.5 g butylene oxide were added within 2 hours. To complete the reaction, the mixture was allowed to post-react for 5 hours. Volatile compounds were removed in vacuo at 90°C. 735.0 g of a light brown oil were obtained (cloud point 27°C (1% in water)).

### Comparative example 3 (CE3): polyethylene imine, molecular weight 600 g/mol, alkoxylated with 4 mole 1,2-butylene oxide and 24 mole ethylene oxide per NH functionality.

### Step 3a): polyethylene imine, molecular weight 600 g/mol, alkoxylated with 1 mole 1,2-butylene oxide per NH functionality

A 2 I autoclave was charged with 430.0 g of a polyethylenimine with an average molecular weight of 600 g/mol and 21.5 g water. The reactor was purged three times with nitrogen and heated to 120°C. 721.1 g 1,2-butylene oxide were added within 11 hours. To complete the reaction, the reaction mixture was allowed to post-react for 10 hours. Water and volatile compounds were removed in vacuo (20 mbar) at 90°C for 3 hours. A highly viscous yellow oil (1151.0 g) was obtained.

### Step 3b): polyethylene imine, molecular weight 600 g/mol, alkoxylated with 4 mole 1,2-butylene oxide per NH functionality

Product from step 3a) (345.3 g) and 4.23 g potassium hydroxide (50% in water) was placed in a 2 I autoclave. The mixture was heated under vacuum (< 10 mbar) to 120°C and stirred for 2 hours to remove water. The reactor was purged three times with nitrogen and the mixture was heated to 140°C. 648.9 g 1,2-butylene oxide were added within 11 hours. To complete the reaction, the mixture was allowed to post-react for 10 hours. Volatile compounds were removed in vacuo. 995.0 g of a yellow viscous oil were obtained.

### Step 3c): polyethylene imine, molecular weight 600 g/mol, alkoxylated with 4 mole 1,2-butylene oxide and 24 mole ethylene oxide per NH functionality

Product from step 3b) (232.0 g) and 3.15 g potassium hydroxide (50% in water) was placed in a 2 I autoclave. The mixture was heated under vacuum (< 10 mbar) to 120°C and stirred for 2 hours to remove water. The reactor was purged three times with nitrogen and the mixture was heated to 140°C. 740.0 g ethylene oxide were added within 16 hours. To complete the reaction, the mixture was allowed to post-react for 5 hours. Volatile compounds were removed in vacuo. 974.0 g of a light brown solid were obtained.

### Examples for the use in laundry detergents

Technical stains PC-S-94, w-20D and PC-S-132 were purchased from CFT (Center for Testmaterials, The Netherlands). The stains were washed for 30 min in a launder-o-meter (manufactured by SDL Atlas) at 30 °C using per canister 500 mL of washing solution, 20 metal balls and ballast fabrics. The washing solution contained 2000 ppm of detergent composition (table 1). Water hardness was 1 mM (Ca2+ : Mg2+ was 4:1). Additives were added to the washing solution of each canister separately and in the amount as detailed below. After addition the pH value was re-adjusted to the pH value of washing solution without additive.

Standard colorimetric measurement was used to obtain L*, a* and b* values for each stain before and after the washing. From L*, a* and b* values the stain removal index (SRI) was calculated according to ASTM Designation: D4265 - 14.

In the following examples, the individual ingredients within the cleaning compositions are expressed as percentages by weight of the cleaning compositions.

The following laundry detergent compositions are prepared by traditional means known to those of ordinary skill in the art by mixing the listed ingredients.

### Examples:

| | |
|---|---|
| Example 1: | PEI600 + 24 EO /NH + 4 BuO/NH |
| Example 2: | PEI600 + 24 EO /NH + 6 BuO/NH |
| Comparative Example CE3: | PEI600 + 4 BuO/NH + 24 EO/NH |

The examples above are added as additives to the detergent composition as shown in table 1 and employed as a laundry detergent using a launder-o-meter as shown in table 2.

**Table 1: Detergent**

| | |
|---|---|
| Dodecyl benzenesulfonate | 6,9 g |
| C12C14- fatty alcohol ethersulfate (2 EO), sodium salt, 70% aqueous solution | 11,3 g |
| KOH | to pH 8,5 |
| C13C15- oxo alcohol ethoxylate (7 EO) | 1,0 g |
| 1,2 Propylenglykol | 6,0 g |
| Ethanol | 2,0 g |
| water | to 100 g |

**Table 2: 2000 ppm detergent have been used together with 25 ppm of additive. 30°C, hardness: 1 mM.**

| Additive | Stain PCS-132 / [SRI] | Stain PCS-94 / [SRI] | Stain wfk20D / [SRI] | Average of three stains / [SRI] |
|---|---|---|---|---|
| none | 22,9 | 26,1 | 23,8 | 24,3 |
| Example 1 | 28,7 | 38,8 | 45,6 | 37,7 |
| Example 2 | 28,5 | 41,1 | 50,9 | 40,1 |
| CE3 | 25,6 | 34,7 | 30,9 | 30,4 |

As can be seen from table 2, stains can be removed more efficiently (higher SRI values) by employing a detergent composition containing compounds according to the present invention (examples 1 and 2) having a terminal polybutylene oxide block, compared to a composition containing comparative example 3 instead, wherein the polybutylene oxide block is not a terminal block, but the polybutylene oxide block is at a different position within the respective alkoxylated compound.

In the following, illustrative examples for specific cleaning compositions are provided. The alkoxylated polyalkylene imines or alkoxylated polyamines according to the present invention, for example, the specific compounds as described above in the context of examples 1 or 2, are added to those illustrative examples of cleaning compositions in a suitable amount known to a person skilled in the art.

### Illustrative example, hand dish washing compositions:

| **Ingredient (active wt%)** | **Composition 1 (wt%)** | **Composition 2 (wt%)** |
|---|---|---|
| C₁₂₋₁₃AE_{0.6}S anionic surfactant (Avg. branching : 33,44%) | 21.5% | 21.2% |
| C₁₂₋₁₄ dimethyl amine oxide | 7.2% | - |
| CAP-betaine (Empigen BS/PG3) | - | 7.0% |
| Alcohol ethoxylate nonionic surfactant (Neodol 91/8) | - | 0.5% |
| Ethanol | 1.9% | 1.9% |
| NaCl | 0.7% | 0.7% |
| Na-citrate | 1% | 1% |
| Polypropyleneglycol (MW2000) | 0.55% | 0.55% |
| Water + minor ingredients (perfume, dye, preservatives) | Balance to 100% | Balance to 100% |
| pH (at 10% product concentration in demineralized water - with NaOH/HCI trimming) | 9.0 | 9.0 |

### Illustrative example, water-soluble laundry detergent unit dose pouch:

A water-soluble unit dose laundry detergent pouch comprising a polyvinyl alcohol or polyvinyl alcohol copolymer-based water-soluble film, preferably wherein the film is a blend of polyvinyl alcohol homopolymers and/or polyvinyl alcohol copolymers, and a liquid laundry detergent comprising:

| **Ingredient (active wt%)** | **Composition 3 (wt%** |
|---|---|
| Linear C₉-C₁₅ alkylbenzene sulfonic acid | 15-25 |
| C₁₂₋₁₅ ethoxylated alkyl sulphate with an average degree of ethoxylation of 3 | 5-20 |
| C₁₂₋₁₄ fatty alcohol ethoxylate having an average degree of ethoxylation of 7 | 2-10 |
| Citric Acid | 0.5-2 |
| Fatty acid | 4-10 |
| Chelants | 0.5-2.5 |
| Cleaning polymers (selected from CMC, polyester terephthalate (preferably anionically modified), amphiphilic graft copolymer, ethoxylated polyethyleneimine or a mixture thereof) | 4-10 |
| Enzymes (selected from amylase, protease, lipase, xyloglucanase or a mixture thereof) | 0.01-1 |
| Brightener 49 | 0.05-1 |
| Structurant (preferably hydrogenated castor oil) | 0.05-0.5 |
| Solvent system (selected from propanediol, glycerol, ethanol, dipropyleneglycol, tripropyleneglycol, polyetheyleneglycol, polypropyleneglycol) | 10-30 |
| Water | 5-15 |
| Perfume | 0.5-2 |
| Perfume capsule | 0.5-2 |
| Aesthetic dye, opacifier or a mixture thereof | 0.5-2 |
| Mono-ethanolamine, NaOH or mixture thereof | 5-15 |
| Other laundry adjuncts / minors (incl. preservatives, antioxidants) | to 100 |

### Illustrative example, liquid laundry detergent compositions:

| **Ingredient (active wt%)** | **Composition 4 (wt%)** | **Composition 5 (wt%)** | **Composition 6 (wt%)** |
|---|---|---|---|
| C₁₂-₁₄AE₁₋₃S | 13 | 8.3 | 10 |
| C₁₁-₁₃LAS | 3 | 5.5 | 6.5 |
| Neodol ^{®}25-7 alcohol | 1.4 | 4 | 7 |
| Citric acid | 0 | 2 | 1.7 |
| Boric acid | 0 | 2 | 1.9 |
| C₁₂-₁₈ fatty acid | 1.5 | 1.2 | 1.3 |
| Na-DTPA | 0.06 | 0.2 | 0.4 |
| Propylene glycol | 0 | 1.2 | 2.5 |
| Calcium chloride | 0 | 0 | 0.06 |
| Silicone emulsion | 0 | 0.0025 | 0.0025 |
| Monoethanolamine | 0.096 | 0.096 | 0.096 |
| NaOH | Up to pH 8 | Up to pH 8 | Up to pH 8 |
| Tinosan ^{®}HP100 | 0.25 | 0.25 | 0.25 |
| Perfume microcapsule | 0.15 | 0.15 | 0.35 |
| Hydrogenated castor oil | 0.12 | 0.12 | 0.12 |
| Brightener | 0 | 0.06 | 0.06 |
| Protease | 0 | 0 | 0.45 |
| Amylase | 0 | 0 | 0.08 |
| Dye | 0 | 0.002 | 0.002 |
| Neat perfume oil | 0 | 0.6 | 0.6 |
| Water | to 100 | to 100 | to 100 |

### Illustrative example, solid free-flowing particulate laundry detergent composition:

| **Ingredient** | **Composition 7 (wt%)** |
|---|---|
| Anionic detersive surfactant (such as alkyl benzene sulphonate, alkyl ethoxylated sulphate and mixtures thereof) | from 8wt% to 15wt% |
| Non-ionic detersive surfactant (such as alkyl ethoxylated alcohol) | from 0.1wt% to 4wt% |
| Cationic detersive surfactant (such as quaternary ammonium compounds) | from 0wt% to 4wt% |
| Other detersive surfactant (such as zwiterionic detersive surfactants, amphoteric surfactants and mixtures thereof) | from 0wt% to 4wt% |
| Carboxylate polymer (such as co-polymers of maleic acid and acrylic acid and/or carboxylate polymers comprising ether moieties and sulfonate moieties) | from 0.1wt% to 4wt% |
| Polyethylene glycol polymer (such as a polyethylene glycol polymer comprising polyvinyl acetate side chains) | from 0wt% to 4wt% |
| Polyester soil release polymer (such as Repel-o-tex and/or Texcare polymers) | from 0wt% to 2wt% |
| Cellulosic polymer (such as carboxymethyl cellulose, methyl cellulose and combinations thereof) | from 0.5wt% to 2wt% |
| Other polymer (such as care polymers) | from 0wt% to 4wt% |
| Zeolite builder and phosphate builder (such as zeolite 4A and/or sodium tripolyphosphate) | from 0wt% to 4wt% |
| Other co-builder (such as sodium citrate and/or citric acid) | from 0wt% to 3wt% |
| Carbonate salt (such as sodium carbonate and/or sodium bicarbonate) | from 0wt% to 20wt% |
| Silicate salt (such as sodium silicate) | from 0wt% to 10wt% |
| Filler (such as sodium sulphate and/or bio-fillers) | from 10wt% to 70wt% |
| Source of hydrogen peroxide (such as sodium percarbonate) | from 0wt% to 20wt% |
| Bleach activator (such as tetraacetylethylene diamine (TAED) and/or nonanoyloxybenzenesulphonate (NOBS)) | from 0wt% to 8wt% |
| Bleach catalyst (such as oxaziridinium-based bleach catalyst and/or transition metal bleach catalyst) | from 0wt% to 0.1wt% |
| Other bleach (such as reducing bleach and/or pre-formed peracid) | from 0wt% to 10wt% |
| Photobleach (such as zinc and/or aluminium sulphonated phthalocyanine) | from 0wt% to 0.1wt% |
| Chelant (such as ethylenediamine-N'N'-disuccinic acid (EDDS) and/or hydroxyethane diphosphonic acid (HEDP)) | from 0.2wt% to 1wt% |
| Hueing agent (such as direct violet 9, 66, 99, acid red 50, | from 0wt% to 1wt% |
| solvent violet 13 and any combination thereof) | |
| Brightener (C.I. fluorescent brightener 260 or C.I. fluorescent brightener 351) | from 0.1wt% to 0.4wt% |
| Protease (such as Savinase, Savinase Ultra, Purafect, FN3, FN4 and any combination thereof) | from 0.1wt% to 0.4wt% |
| Amylase (such as Termamyl, Termamyl ultra, Natalase, Optisize, Stainzyme, Stainzyme Plus and any combination thereof) | from 0wt% to 0.2wt% |
| Cellulase (such as Carezyme and/or Celluclean) | from 0wt% to 0.2wt% |
| Lipase (such as Lipex, Lipolex, Lipoclean and any combination thereof) | from 0wt% to 1wt% |
| Other enzyme (such as xyloglucanase, cutinase, pectate lyase, mannanase, bleaching enzyme) | from 0wt% to 2wt% |
| Fabric softener (such as montmorillonite clay and/or polydimethylsiloxane (PDMS)) | from 0wt% to 15wt% |
| Flocculant (such as polyethylene oxide) | from 0wt% to 1wt% |
| Suds suppressor (such as silicone and/or fatty acid) | from 0wt% to 4wt% |
| Perfume (such as perfume microcapsule, spray-on perfume, starch encapsulated perfume accords, perfume loaded zeolite, and any combination thereof) | from 0.1wt% to 1wt% |
| Aesthetics (such as coloured soap rings and/or coloured speckles/noodles) | from 0wt% to 1wt% |
| Miscellaneous | balance to 100wt% |

## Claims

1. An alkoxylated polyalkylene imine or alkoxylated polyamine of the general formula (I) 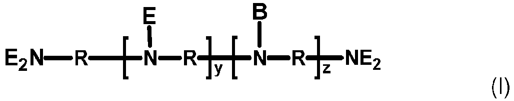 in which the variables are each defined as follows:
R represents identical or different, linear or branched C₂-C₁₂-alkylene radicals or an etheralkyl unit of the following formula (III): 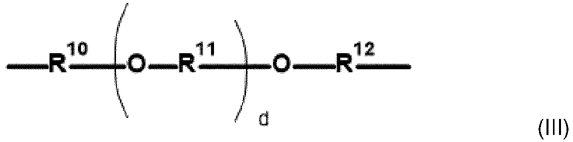
in which the variables are each defined as follows:
R¹⁰, R¹¹, R¹² represent identical or different, linear or branched C₂-C₆-alkylene radicals and
d is an integer having a value in the range of 0 to 50;
B represents a continuation of the alkoxylated polyalkylene imine by branching;
y and z are each an integer having a value in the range of 0 to 150,
E represents identical or different alkylenoxy units of the formula (II) 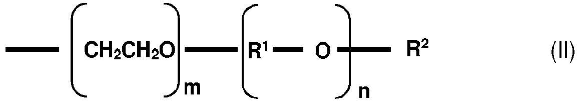
in which the variables are each defined as follows:
R¹ represents 1,2-butylene and/or 1,2-isobutylene;
R² represents hydrogen and/or C₁-C₂₂-alkyl and/or C₇-C₂₂ aralkyl;
m is an integer having a value of at least 20;
n is an integer having a value of at least 3.

2. The alkoxylated polyalkylene imine or alkoxylated polyamine according to claim 1, wherein R represents identical or different, linear or branched C₂-C₁₂-alkylene radicals, preferably R is ethylene, propylene or hexamethylene.

3. The alkoxylated polyalkylene imine or alkoxylated polyamine according to claim 1 or 2, wherein within formula (II) the variables are each defined as follows:
R¹ represents 1,2-butylene;
R² represents hydrogen and/or C₁-C₄-alkyl, preferably hydrogen, methyl and/or ethyl, most preferably hydrogen;
m is an integer having a value in the range of 20 to 50, preferably of 20 to 40, more preferably of 21 to 28, in particular of 22 to 25;
n is an integer having a value in the range of 3 to 20, preferably of 4 to 12, more preferably of 4 to 8, in particular of 4 to 7.

4. The alkoxylated polyalkylene imine or alkoxylated polyamine according to any one of claims 1 to 3, wherein the weight average molecular weight (Mw) of the polyalkylene imine backbone or of the polyamine backbone, determined by gel permeation chromatography, lies in the range of 50 to 10 000 g/mol, preferably in the range of 500 to 5000 g/mol, more preferably in the range of 600 to 1000 g/mol.

5. The alkoxylated polyalkylene imine according to any of claims 1 to 4, wherein the variables are each defined as follows:
R is ethylene or propylene, preferably ethylene;
the sum of y+z is an integer having a value in the range of 9 to 120, preferably in the range of 10 to 20.

6. The alkoxylated polyalkylene imine according to claim 5, wherein
R is ethylene or propylene, preferably ethylene;
the sum of y+z is an integer having a value in the range of 9 to 120, preferably in the range of 10 to 20;
R¹ represents 1,2-butylene;
R² represents hydrogen and/or C₁-C₄-alkyl, preferably hydrogen, methyl and/or ethyl, most preferably hydrogen;
m is an integer having a value in the range of 20 to 50, preferably 20 to 40, more preferably of 21 to 28, in particular of 22 to 25;
n is an integer having a value in the range of 3 to 20, preferably of 4 to 12, more preferably of 4 to 8, in particular of 4 to 7.

7. The alkoxylated polyalkylene imine according to claim 5 or 6, wherein the variables are each defined as follows:
R is ethylene
the sum of y+z is an integer having a value in the range of 10 to 20;
R¹ represents 1,2-butylene;
R² represents hydrogen;
m is an integer having a value in the range of 22 to 25;
n is an integer having a value in the range of 4 to 7.

8. The alkoxylated polyamine according to any of claims 1 to 4, wherein
y and z are both 0,
R represents identical or different, linear or branched C₂-C₁₂-alkylene radicals or an etheralkyl unit according to formula (III), wherein
d is from 1 to 5, and
R¹⁰, R¹¹, R¹² are independently selected from linear or branched C₃ to C₄ alkylene radicals.

9. The alkoxylated polyamine according to claim 8, wherein
R¹ represents 1,2-butylene;
R² represents hydrogen and/or C₁-C₄-alkyl, preferably hydrogen, methyl and/or ethyl, most preferably hydrogen;
m is an integer having a value in the range of 20 to 50, preferably 20 to 40, more preferably of 21 to 28, in particular of 22 to 25;
n is an integer having a value in the range of 3 to 20, preferably of 4 to 12, more preferably of 4 to 8, in particular of 4 to 7.

10. The alkoxylated polyamine according to claim 8 or 9, wherein
R is linear hexamethylene;
R¹ represents 1,2-butylene;
R² represents hydrogen;
m is an integer having a value in the range of 22 to 25;
n is an integer having a value in the range of 4 to 7.

11. The alkoxylated polyalkylene imine or alkoxylated polyamine according to any one of claims 1 to 10, wherein up to 100% of the nitrogen atoms present in the alkoxylated polyalkylene imine or alkoxylated polyamine are quaternized, preferably the degree of quaternization of the nitrogen atoms present in the alkoxylated polyalkylene imine or alkoxylated polyamine lies in the range of 10% to 95%.

12. Use of the alkoxylated polyalkylene imine or alkoxylated polyamine according to any one of claims 1 to 11 in cosmetic formulations, as crude oil emulsion breaker, in pigment dispersions for ink jet inks, formulations for electro plating, in cementitious compositions.

13. A process for preparing an alkoxylated polyalkylene imine or an alkoxylated polyamine according to claims 1 to 11, wherein a polyalkylene imine backbone or a polyamine backbone is first reacted with ethylene oxide and then with butylene oxide in order to obtain the respective alkoxylated compounds.

14. A process according to claim 13 in which per mol of N-H functionalities in the polyalkylene imine or polyamine the polyalkylene imine backbone or polyamine backbone is reacted with at least 20 moles ethylene oxide and then with at least 3 moles butylene oxide.

15. A process according to claims 13 or 14 in which the alkoxylated polyalkylene imine or the alkoxylated polyamine is additionally quaternized.

## Patentansprüche

1. Alkoxyliertes Polyalkylenimin oder alkoxyliertes Polyamin der allgemeinen Formel (I) 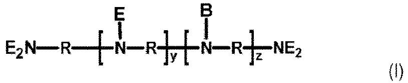 in der die Variablen folgende Bedeutung haben:
R gleiche oder verschiedene, lineare oder verzweigte C₂-C₁₂-Alkylenreste oder eine Etheralkyleinheit der folgenden Formel (III): 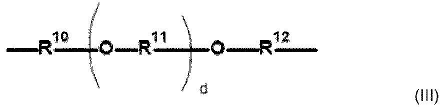
in der die Variablen folgende Bedeutung haben:
R¹⁰, R¹¹, R¹² gleiche oder verschiedene, lineare oder verzweigte C₂-C₆-Alkylenreste und
d eine ganze Zahl mit einem Wert im Bereich von 0 bis 50;
B eine Fortsetzung des alkylierten Polyalkylenimins durch Verzweigung;
y und z jeweils eine ganze Zahl mit einem Wert im Bereich von 0 bis 150,
E gleiche oder verschiedene Alkylenoxyeinheiten der Formel (II) 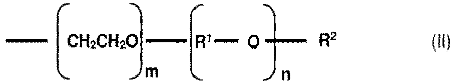
in der die Variablen folgende Bedeutung haben:
R¹ 1,2-Butylen und/oder 1,2-Isobutylen;
R² Wasserstoff und/oder C₁-C₂₂-Alkyl und/oder C₇-C₂₂-Aralkyl;
m eine ganze Zahl mit einem Wert von mindestens 20;
n eine ganze Zahl mit einem Wert von mindestens 3.

2. Alkoxyliertes Polyalkylenimin oder alkoxyliertes Polyamin nach Anspruch 1, wobei R für gleiche oder verschiedene, lineare oder verzweigte C₂-C₁₂-Alkylenreste steht und R bevorzugt für Ethylen, Propylen oder Hexamethylen steht.

3. Alkoxyliertes Polyalkylenimin oder alkoxyliertes Polyamin nach Anspruch 1 oder 2, wobei in Formel (II) die Variablen folgende Bedeutungen haben:
R¹ 1,2-Butylen;
R² Wasserstoff und/oder C₁-C₄-Alkyl, bevorzugt Wasserstoff, Methyl und/oder Ethyl, ganz besonders bevorzugt Wasserstoff;
m eine ganze Zahl mit einem Wert im Bereich von 20 bis 50, bevorzugt von 20 bis 40, weiter bevorzugt von 21 bis 28, insbesondere von 22 bis 25;
n eine ganze Zahl mit einem Wert im Bereich von 3 bis 20, bevorzugt von 4 bis 12, weiter bevorzugt von 4 bis 8, insbesondere von 4 bis 7.

4. Alkoxyliertes Polyalkylenimin oder alkoxyliertes Polyamin nach einem der Ansprüche 1 bis 3, wobei das durch Gelpermeationschromatographie bestimmte gewichtsmittlere Molekulargewicht (Mw) der Polyalkylenimin-Hauptkette oder der Polyamin-Hauptkette im Bereich von 50 bis 10.000 g/mol, bevorzugt im Bereich von 500 bis 5000 g/mol, weiter bevorzugt im Bereich von 600 bis 1000 g/mol, liegt.

5. Alkoxyliertes Polyalkylenimin nach einem der Ansprüche 1 bis 4, wobei die Variablen folgende Bedeutung haben:
R Ethylen oder Propylen, bevorzugt Ethylen;
die Summe von y+z eine ganze Zahl mit einem Wert im Bereich von 9 bis 120, bevorzugt im Bereich von 10 bis 20.

6. Alkoxyliertes Polyalkylenimin nach Anspruch 5, wobei
R Ethylen oder Propylen, bevorzugt Ethylen, ist;
die Summe von y+z eine ganze Zahl mit einem Wert im Bereich von 9 bis 120, bevorzugt im Bereich von 10 bis 20, ist;
R¹ für 1,2-Butylen steht;
R² für Wasserstoff und/oder C₁-C₄-Alkyl, bevorzugt Wasserstoff, Methyl und/oder Ethyl, ganz besonders bevorzugt Wasserstoff, steht;
m eine ganze Zahl mit einem Wert im Bereich von 20 bis 50, bevorzugt von 20 bis 40, weiter bevorzugt von 21 bis 28, insbesondere von 22 bis 25, ist;
n eine ganze Zahl mit einem Wert im Bereich von 3 bis 20, bevorzugt von 4 bis 12, weiter bevorzugt von 4 bis 8, insbesondere von 4 bis 7, ist.

7. Alkoxyliertes Polyalkylenimin nach Anspruch 5 oder 6, wobei die Variablen folgende Bedeutung haben:
R Ethylen;
die Summe von y+z eine ganze Zahl mit einem Wert im Bereich von 10 bis 20;
R¹ für 1,2-Butylen;
R² für Wasserstoff;
m eine ganze Zahl mit einem Wert im Bereich von 22 bis 25;
n eine ganze Zahl mit einem Wert im Bereich von 4 bis 7.

8. Alkoxyliertes Polyamin nach einem der Ansprüche 1 bis 4, wobei:
y und z beide 0 sind;
R für gleiche oder verschiedene, lineare oder verzweigte C₂-C₁₂-Alkylenreste oder eine Etheralkyleinheit gemäß Formel (III) steht, wobei
d 1 bis 5 ist und
R¹⁰, R¹¹, R¹² unabhängig aus linearen oder verzweigten C₃- bis C₄-Alkylenresten ausgewählt sind.

9. Alkoxyliertes Polyamin nach Anspruch 8, wobei
R¹ für 1,2-Butylen steht;
R² für Wasserstoff und/oder C₁-C₄-Alkyl, bevorzugt Wasserstoff, Methyl und/oder Ethyl, ganz besonders bevorzugt Wasserstoff, steht;
m eine ganze Zahl mit einem Wert im Bereich von 20 bis 50, bevorzugt von 20 bis 40, weiter bevorzugt von 21 bis 28, insbesondere von 22 bis 25, ist;
n eine ganze Zahl mit einem Wert im Bereich von 3 bis 20, bevorzugt von 4 bis 12, weiter bevorzugt von 4 bis 8, insbesondere von 4 bis 7, ist.

10. Alkoxyliertes Polyamin nach Anspruch 8 oder 9, wobei
R für lineares Hexamethylen steht;
R¹ für 1,2-Butylen steht;
R² für Wasserstoff steht;
m eine ganze Zahl mit einem Wert im Bereich von 22 bis 25 ist;
n eine ganze Zahl mit einem Wert im Bereich von 4 bis 7 ist.

11. Alkoxyliertes Polyalkylenimin oder alkoxyliertes Polyamin nach einem der Ansprüche 1 bis 10, wobei bis zu 100 % der in dem alkoxylierten Polyalkylenimin bzw. alkoxylierten Polyamin vorliegenden Stickstoffatome quaternisiert sind und der Quaternisierung Grad der in dem alkoxylierten Polyalkylenimin bzw. alkoxylierten Polyamin vorliegenden Stickstoffatome vorzugsweise im Bereich von 10 % bis 95 % liegt.

12. Verwendung des alkoxylierten Polyalkylenimins oder alkoxylierten Polyamins nach einem der Ansprüche 1 bis 11 in kosmetischen Formulierungen, als Rohölemulsionsbrecher, in Pigmentdispersionen für Tintenstrahltinten, Formulierungen zur Galvanisierung, in zementösen Zusammensetzungen.

13. Verfahren zur Herstellung eines alkoxylierten Polyalkylenimins oder eines alkoxylierten Polyamins nach einem der Ansprüche 1 bis 11 bei dem man eine Polyalkylenimin-Hauptkette bzw. eine Polyamin-Hauptkette zunächst mit Ethylenoxid und dann mit Butylenoxid zu den jeweiligen alkoxylierten Verbindungen umsetzt.

14. Verfahren nach Anspruch 13, bei dem pro Mol NH-Funktionalitäten in dem Polyalkylenimin bzw. Polyamin die Polyalkylenimin-Hauptkette bzw. Polyamin-Hauptkette mit mindestens 20 mol Ethylenoxid und dann mit mindestens 3 mol Butylenoxid umgesetzt wird.

15. Verfahren nach Anspruch 13 oder 14, bei dem das alkoxylierte Polyalkylenimin oder das alkoxylierte Polyamin zusätzlich quaternisiert wird.

## Revendications

1. Polyalkylène imine alcoxylée ou polyamine alcoxylée de la formule générale (I) 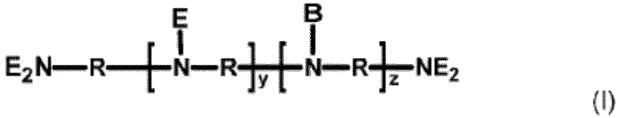 dans laquelle les variables sont chacune définies comme suit :
R représente des radicaux C₂₋₁₂-alkyléne linéaires ou ramifiés, identiques ou différents ou un motif étheralkyle de la formule suivante (III) : 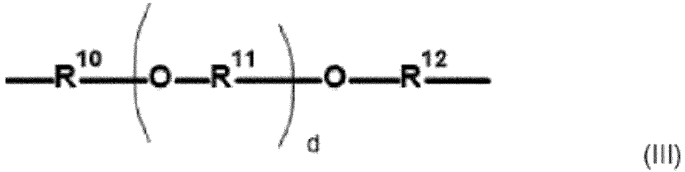
dans laquelle les variables sont chacune définies comme suit :
R¹⁰, R¹¹, R¹² représentent des radicaux C₂₋₆-alkylène linéaires ou ramifiés, identiques ou différents et
d est un entier possédant une valeur dans la plage de 0 à 50 ;
B représente une continuation de la polyalkylène imine alcoxylée par ramification ;
y et z sont chacun un entier possédant une valeur dans la plage de 0 à 150,
E représente des motifs alkylèneoxy identiques ou différents, de la formule (II) 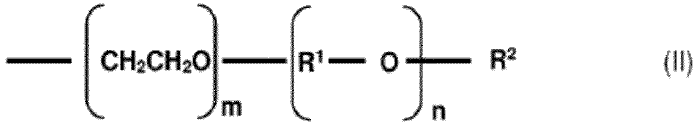
dans laquelle les variables sont chacune définies comme suit :
R¹ représente 1,2-butylène et/ou 1,2-isobutylène ;
R² représente hydrogène et/ou C₁₋₂₂-alkyle et/ou C₇₋₂₂-aralkyle ;
m est un entier possédant une valeur d'au moins 20 ;
n est un entier possédant une valeur d'au moins 3.

2. Polyalkylène imine alcoxylée ou polyamine alcoxylée selon la revendication 1, R représentant des radicaux C₂₋₁₂-alkylène linéaires ou ramifiés, identiques ou différents, préférablement R étant éthylène, propylène ou hexamethylène.

3. Polyalkylène imine alcoxylée ou polyamine alcoxylée selon la revendication 1 ou 2, dans la formule (II) les variables étant chacune définies comme suit :
R¹ représentant 1,2-butylène ;
R² représentant hydrogène et/ou C₁₋₄-alkyle, préférablement hydrogène, méthyle et/ou éthyle, le plus préférablement hydrogène ;
m étant un entier possédant une valeur dans la plage de 20 à 50, préférablement de 20 à 40, plus préférablement de 21 à 28, en particulier de 22 à 25 ;
n est un entier possédant une valeur dans la plage de 3 à 20, préférablement de 4 à 12, plus préférablement de 4 à 8, en particulier de 4 à 7.

4. Polyalkylène imine alcoxylée ou polyamine alcoxylée selon l'une quelconque des revendications 1 à 3, le poids moléculaire moyen en poids (Mw) du squelette de polyalkylène imine ou du squelette de polyamine, déterminé par chromatographie à perméation de gel, se situant dans la plage de 50 à 10 000 g/mole, préférablement dans la plage de 500 à 5 000 g/mole, plus préférablement dans la plage de 600 à 1 000 g/mole.

5. Polyalkylène imine alcoxylée selon l'une quelconque des revendications 1 à 4, les variables étant chacune définies comme suit :
R étant éthylène ou propylène, préférablement éthylène ;
la somme de y + z étant un entier possédant une valeur dans la plage de 9 à 120, préférablement dans la plage de 10 à 20.

6. Polyalkylène imine alcoxylée selon la revendication 5,
R étant éthylène ou propylène, préférablement éthylène ;
la somme de y + z étant un entier possédant une valeur dans la plage de 9 à 120, préférablement dans la plage de 10 à 20 ;
R¹ représentant 1,2-butylène ;
R² représentant hydrogène et/ou C₁₋₄-alkyle, préférablement hydrogène, méthyle et/ou éthyle, le plus préférablement hydrogène ;
m étant un entier possédant une valeur dans la plage de 20 à 50, préférablement de 20 à 40, plus préférablement de 21 à 28, en particulier de 22 à 25 ;
n étant un entier possédant une valeur dans la plage de 3 à 20, préférablement de 4 à 12, plus préférablement de 4 à 8, en particulier de 4 à 7.

7. Polyalkylène imine alcoxylée selon la revendication 5 ou 6, les variables étant chacune définies comme suit
R étant éthylène
la somme de y + z étant un entier possédant une valeur dans la plage de 10 à 20 ;
R¹ représentant 1,2-butylène ;
R² représentant hydrogène ;
m étant un entier possédant une valeur dans la plage de de 22 à 25 ;
n étant un entier possédant une valeur dans la plage de 4 à 7.

8. Polyamine alcoxylée selon l'une quelconque des revendications 1 à 4,
y et z étant tous deux 0,
R représentant des radicaux C₂₋₁₂-alkylène linéaires ou ramifiés, identiques ou différents ou un motif étheralkyle selon la formule (III), dans laquelle d est de 1 à 5, et R¹⁰, R¹¹, R¹² sont indépendamment choisis parmi des radicaux C₃₋₄-alkylène linéaires ou ramifiés.

9. Polyamine alcoxylée selon la revendication 8,
R¹ représentant 1,2-butylène ;
R² représentant hydrogène et/ou C₁₋₄-alkyle, préférablement hydrogène, méthyle et/ou éthyle, le plus préférablement hydrogène ;
m étant un entier possédant une valeur dans la plage de 20 à 50, préférablement de 20 à 40, plus préférablement de 21 à 28, en particulier de 22 à 25 ;
n étant un entier possédant une valeur dans la plage de 3 à 20, préférablement de 4 à 12, plus préférablement de 4 à 8, en particulier de 4 à 7.

10. Polyamine alcoxylée selon la revendication 8 ou 9,
R étant hexamethylène linéaire ;
R¹ représentant 1,2-butylène ;
R² représentant hydrogène ;
m étant un entier possédant une valeur dans la plage de 22 à 25 ;
n étant un entier possédant une valeur dans la plage de 4 à 7.

11. Polyalkylène imine alcoxylée ou polyamine alcoxylée selon l'une quelconque des revendications 1 à 10, jusqu'à 100 % des atomes d'azote présents dans la polyalkylène imine alcoxylée ou la polyamine alcoxylée étant quaternisés, préférablement, le degré de quaternisation des atomes d'azote présents dans la polyalkylène imine alcoxylée ou la polyamine alcoxylée se situant dans la plage de 10 % à 95 %.

12. Utilisation de la polyalkylène imine alcoxylée ou de la polyamine alcoxylée selon l'une quelconque des revendications 1 à 11 dans des formulations cosmétiques, en tant qu'agent de rupture d'émulsion d'huile brute, dans des dispersions de pigments pour des encres pour jet d'encre, des formulations pour placage électrolytique, dans des compositions cimentaires.

13. Procédé pour la préparation d'une polyalkylène imine alcoxylée ou d'une polyamine alcoxylée selon les revendications 1 à 11, un squelette de polyalkylène imine ou un squelette de polyamine étant d'abord mis à réagir avec de l'oxyde d'éthylène et ensuite avec de l'oxyde de butylène afin d'obtenir les composés alcoxylés respectifs.

14. Procédé selon la revendication 13 dans lequel, par mole de fonctionnalités N-H dans la polyalkylène imine ou la polyamine, le squelette de polyalkylène imine ou le squelette de polyamine est mis à réagir avec au moins 20 moles d'oxyde d'éthylène et ensuite avec au moins 3 moles d'oxyde de butylène.

15. Procédé selon la revendication 13 ou 14 dans lequel la polyalkylène imine alcoxylée ou la polyamine alcoxylée est de plus quaternisée.
